# EUROPÄISCHE PATENTANMELDUNG

(11) **EP 4 481 100 A2**
(43) Veröffentlichungstag der Anmeldung: **25.12.2024**
(21) Anmeldenummer: 24174536.3
(22) Anmeldetag: 07.05.2024
(51) Int. Cl.: D06F 39/10, D06F 25/00, D06F 39/08, D06F 39/02

(54) **WASSERFÜHRENDES HAUSHALTSGERÄT, PARTIKELFILTEREINHEIT UND VERFAHREN ZUM REINIGEN EINER PARTIKELFILTEREINHEIT**

(30) Priorität: 20.06.2023 DE 102023205755
(71) Anmelder: BSH Hausgeräte GmbH, 81739 München (DE)
(72) Erfinder: Beckmann, Tyl, 10777 Berlin (DE); König, Thomas, 10585 Berlin (DE)

(57) **Zusammenfassung**

Wasserführendes Haushaltsgerät (20) umfassend einen Behandlungsraum (25) mit einem Abwasserausgang, zumindest eine erste Fluidleitung (31) und eine Partikelfiltereinheit (10) mit einem Partikelfilter, wobei die erste Fluidleitung (31) dazu ausgestaltet ist, Partikel, welche aus dem Abwasserausgang den Behandlungsraum (25) verlassen, mit einem Fluidstrom zu dem Partikelfilter (12) zu leiten, sodass die Partikelfiltereinheit (10) die Partikel mittels dem Partikelfilter (12) aus dem Fluidstrom herausfiltert und in Form eines Retentats (1) sammelt, wobei die Partikelfiltereinheit (10) derart in dem Haushaltsgerät (20) angeordnet ist, dass sie von einem Nutzer (50) herausnehmbar ist, wobei die Partikelfiltereinheit (10) ein Entwässerungselement umfasst, das es einem Nutzer (50) ermöglicht, manuell Wasser aus dem Retentat (1) durch den Partikelfilter (12) herauszupressen.

## Beschreibung

Die vorliegende Erfindung betrifft ein wasserführendes Haushaltsgerät, eine Partikelfiltereinheit und ein Verfahren zum Reinigen einer Partikelfiltereinheit.

Wasserführende Haushaltsgeräte, insbesondere Waschmaschinen, umfassen typischerweise Filterelemente, welche Partikel aus dem Abwasser entfernen bzw. zurückhalten sollen. Derartige Filterelemente haben die Eigenschaft, Partikel oberhalb einer bestimmten Größe aufzufangen. Die bestimmte Größe wird typischerweise durch die Eigenschaften des jeweiligen Filterelements festgelegt und kann darauf abgestimmt sein, welche Partikel gefiltert werden sollen. Das von dem Filterelement aufgefangene Material, umfassend die Partikel wird üblicherweise als Retentat bezeichnet. Besonders vorteilhaft wird Mikroplastik aus dem Abwasser herausgefiltert, um einer Umweltbeeinträchtigung vorzubeugen. Mikroplastik kann aufgrund seines typischerweise geringen Durchmessers beispielsweise in Kläranlagen nicht immer vollständig entfernt werden, wodurch es in den Wasserkreislauf gelangen kann.

Um eine langfristige Funktionsfähigkeit des Filterelements gewährleisten zu können, ist es in der Regel notwendig, dieses immer wieder zu reinigen. Dabei ist es erstrebenswert, dass zum Reinigen des Filterelements außer dem Retentat kein weiteres Verbrauchsmaterial entsorgt werden muss. Retentat aus einem Waschprozess einer Waschmaschine enthält üblicherweise sehr viele Fasern, die ein hohes Wasseraufnahmevermögen haben, sodass auf dem Filterelement ohne weitere Aufbereitung ein schwer zu entnehmendes Gemisch umfassend Wasser und Fasern, in der Regel mit schleimartiger Konsistenz, zurückbleibt. Ein derartiges Gemisch kann ein Unwohlsein bei einem Nutzer auslösen bzw. es generell Erschweren, das Filterelement zu reinigen. Dies kann zur Folge haben, dass das Filterelement nicht ausreichend oft gereinigt wird. Auch kann ein Nutzer dazu veranlasst werden, das Filterelement z.B. unter fließendem Wasser abzuspülen. Dies steht jedoch dem Sinn des Filterelements entgegen, da in diesem Fall alle aufgefangenen Mikroplastikanteile wieder im Abwasser landen würden.

Es ist daher eine Aufgabe der vorliegenden Erfindung, eine Möglichkeit zu finden, eine Entsorgung des Retentats relativ einfach zu ermöglichen und vorzugsweise ein umweltgerechtes Verhalten eines Nutzers zu begünstigen. Weiterhin ist es wünschenswert, eine Implementierung zu finden, welche günstig, d.h. insbesondere kostengünstig und unaufwändig, umgesetzt werden kann.

Diese Aufgabe wird gelöst durch ein wasserführendes Haushaltsgerät mit den Merkmalen des Anspruchs 1, eine Partikelfiltereinheit mit den Merkmalen des Anspruchs 9 und ein Verfahren mit den Merkmalen des Anspruchs 10. Weitere Vorteile und Merkmale der Erfindung ergeben sich aus den abhängigen Ansprüchen sowie der Beschreibung und den beigefügten Figuren.

Gemäß einem ersten Aspekt der vorliegenden Erfindung ist ein wasserführendes Haushaltsgerät vorgesehen. Das wasserführende Haushaltsgerät kann vorzugsweise ein wasserführendes Wäschepflegegerät, insbesondere eine Waschmaschine oder ein Waschtrockner sein. Das wasserführende Haushaltsgerät umfasst einen Behandlungsraum mit einem Abwasserausgang, zumindest eine erste Fluidleitung und eine Partikelfiltereinheit mit einem Partikelfilter, wobei die erste Fluidleitung dazu ausgestaltet ist, Partikel, welche aus dem Abwasserausgang den Behandlungsraum verlassen, mit einem Fluidstrom zu dem Partikelfilter zu leiten, sodass die Partikelfiltereinheit die Partikel mittels dem Partikelfilter aus dem Fluidstrom herausfiltert und in Form eines Retentats sammelt, wobei die Partikelfiltereinheit derart in dem Haushaltsgerät angeordnet ist, dass sie von einem Nutzer herausnehmbar ist, wobei die Partikelfiltereinheit ein Entwässerungselement, insbesondere einen Auspressstempel umfasst, das es einem Nutzer ermöglicht, manuell Wasser aus dem Retentat durch den Partikelfilter herauszupressen.

Der Behandlungsraum kann ein Wäschebehandlungsraum sein. Insbesondere kann der Behandlungsraum z.B. eine Waschtrommel umfassen oder eine Waschtrommel oder ein Laugenbehälter sein. Der Abwasserausgang des Behandlungsraums kann insbesondere dazu ausgestaltet sein, dass durch den Abwasserausgang ein Fluidgemisch den Behandlungsraum verlassen kann. Das Fluidgemisch kann beispielsweise Wasser und Fasern und eventuell weitere Komponenten wie z.B. ein Waschmittel und weitere Partikel umfassen. Im Sinne dieser Erfindung können Fasern ebenfalls als Partikel bezeichnet werden. Generell können Partikel Teile sein, die im festen Aggregatzustand vorliegen. Die zumindest eine erste Fluidleitung ist dazu ausgestaltet, einen Fluidstrom zu dem Partikelfilter der Partikelfiltereinheit zu leiten. Die erste Fluidleitung weist insbesondere ein Eingangsende und ein Ausgangsende auf. Das Ausgangsende ist insbesondere derart angeordnet, dass der Fluidstrom, wenn er das Ausgangsende verlässt, durch den Partikelfilter geleitet wird. Das Eingangsende kann direkt an dem Abwasserausgang angeschlossen sein. Damit kann der Fluidstrom direkt von dem Abwasserausgang zu dem Partikelfilter geleitet werden. Alternativ kann das Eingangsende an einem weiteren Ort angeordnet sein. In diesem Fall kann das wasserführende Haushaltsgerät beispielsweise dazu ausgestaltet sein, den Fluidstrom zunächst mit einer anderen Fluidleitung zu dem weiteren Ort zu leiten und dann sofort oder zu seinem späteren Zeitpunkt über die erste Fluidleitung zu dem Partikelfilter zu leiten. Der weitere Ort kann beispielsweise ein weiterer Partikelfilter sein bzw. an dem weiteren Ort kann ein weiterer Partikelfilter angeordnet sein.

Die Partikelfiltereinheit umfasst den Partikelfilter und den Auspressstempel. Der Partikelfilter ist dazu ausgestaltet, das Retentat zurückzuhalten. Im Rahmen eines Behandlungsvorgangs kann beispielsweise ein Retentat mit einem Gewicht von 0,5g bis 10g, insbesondere von 2g bis 4g anfallen. Insbesondere kann der Partikelfilter dazu ausgestaltet sein, das Retentat von einem Filtrat zu trennen, das durch den Filter gelangen kann, wobei das Filtrat insbesondere Wasser umfasst. Als Filtrat kann insbesondere ein von Partikeln gefiltertes Wasser bezeichnet werden. Dabei kann es gegebenenfalls möglich sein, dass noch eine Anzahl, insbesondere besonders kleiner, Partikel in dem Filtrat verbleiben. Der Partikelfilter kann insbesondere dazu ausgestaltet sein, Mikroplastik aus dem Fluidstrom zu filtern. Optional kann die Partikelfiltereinheit einen Auffangbehälter umfassen. Der Auffangbehälter kann dazu ausgestaltet sein, das Retentat aufzunehmen. Optional kann der Auffangbehälter weiter dazu ausgestaltet sein, eine Flüssigkeit aus dem Fluidstrom, insbesondere Wasser oder ein Wassergemisch, zumindest zeitweise aufzunehmen. Ein Bodenbereich des Auffangbehälters kann den Partikelfilter umfassen oder durch den Partikelfilter gebildet werden. Die Partikelfiltereinheit ist von einem Nutzer aus dem wasserführenden Haushaltsgerät herausnehmbar. Beispielsweise kann das wasserführende Haushaltsgerät einen Zugangsbereich umfassen, durch den der Nutzer an den Partikelfilter gelangen kann. Das wasserführende Haushaltsgerät kann eine Abdeckelement umfassen, welches dazu ausgestaltet ist, den Zugangsbereich nach außen hin abzudecken, und welches von dem Nutzer derart bewegt werden kann, dass der Nutzer Zugang zu der Partikelfiltereinheit erhält. Beispielsweise kann das Abdeckelement herausziehbar oder aufklappbar sein. Die Partikelfiltereinheit kann mit dem Abdeckelement verbunden oder verbindbar sein, sodass der Nutzer durch ein Herausziehen oder Aufklappen des Abdeckelements die Partikelfiltereinheit aus dem wasserführenden Haushaltsgerät entnehmen kann. Beispielsweise kann das Abdeckelement Teil eines schubladenartigen Elements sein, wobei insbesondere die Partikelfiltereinheit an dem schubladenartigen Element befestigt oder befestigbar sein kann. Die Partikelfiltereinheit und/oder das schubladenartige Element kann zumindest ein Verbindungselement umfassen, das dazu ausgestaltet ist, die Partikelfiltereinheit mit dem schubladenartigen Element zu verbinden bzw. daran zu befestigen. Das wasserführende Haushaltsgerät ist vorzugsweise derart ausgestaltet, dass ein Nutzer den Partikelfilter derart auspressen kann, dass dabei abtropfendes Wasser in das wasserführende Haushaltsgerät gelangt, insbesondere in den Behandlungsraum und/oder in eine Einspülschale. Der Auspressstempel kann vorzugsweise an die Form des Partikelfilters angepasst sein. Vorzugsweise kann der Auspressstempel eine Fläche umfassen, die im Wesentlichen mit der Fläche des Partikelfilters übereinstimmt und dazu ausgestaltet ist, auf den Partikelfilter oder ein Retentat auf dem Partikelfilter pressbar zu sein. Der Auspressstempel kann ein Stempelvolumen umfassen. Das Stempelvolumen kann die Fläche umfassen, die im Wesentlichen mit der Fläche des Partikelfilters übereinstimmt. Das Stempelvolumen kann hohl ausgestaltet sein. Dies kann den Vorteil haben, dass der Auspressstempel ein relativ geringes Gewicht aufweisen kann. Alternativ kann das Stempelvolumen massiv ausgestaltet sein. Damit kann der Auspressstempel besonders robust sein, womit insbesondere ein manuelles Auspressen für den Nutzer erleichtert möglich sein kann. Optional kann der Auspressstempel, insbesondere das Stempelvolumen, an die Form des Auffangbehälters der Partikelfiltereinheit angepasst sein. Insbesondere kann das Stempelvolumen so ausgestaltet sein, dass es zumindest teilweise, bevorzugt im Wesentlichen vollständig in den Auffangbehälter passt.

Vorteilhafterweise kann mit dem erfindungsgemäßen Haushaltsgerät eine besonders einfache Entnahme des Retentants ermöglicht werden. Durch das Entwässerungselement, insbesondere den Auspressstempel, kann zudem ein umweltgerechtes Verhalten des Nutzers begünstigt werden, indem insbesondere das Retentat durch entwässert und kompaktiert werden kann. Dadurch kann beispielsweise erreicht werden, dass das Retentat trocken genug ist bzw. wird, um es, z.B. durch Ausklopfen, im Hausmüll zu entsorgen zu können. Vorteilhafterweise kann damit eine Menge an Flüssigkeit, die ansonsten in den Hausmüll gelangen könnte, zuvor ausgepresst werden. Flüssigkeit im Hausmüll wäre nachteilig, weil z.B. die Gefahr eines Auslaufens oder auch die Gefahr von Schimmelbildung erhöht wäre. Somit kann ein Nutzer ggf. auch davon abgehalten werden, das Retentat unter Wasser auszuspülen und somit Mikroplastik in das Abwasser zu führen. Ein Nutzer kann somit auch einen Anreiz erhalten, aktiv etwas für den Umweltschutz zu tun. Weiterhin kann der Nutzer vorteilhafterweise das Retentat bereits bei dem Haushaltsgerät auspressen, z.B. derart, dass es zurück in das wasserführende Haushaltsgerät gelangt. Damit kann ggf. verhindert werden, dass beim Entnehmen des Retentats größere Mengen Wasser auf den Fußboden tropfen. Vorteilhafterweise kann das Retentat auch relativ zeitnah nach einem Waschgang entnommen werden, insbesondere indem ein noch sehr feuchtes Retentat direkt manuell ausgepresst werden kann. Die Möglichkeit eines manuellen Auspressens stellt zudem eine Lösung dar, die im Vergleich mit einem automatischen Auspresssystem kostengünstiger implementierbar sein kann. Insbesondere wird nicht eine zusätzliche elektromechanische Aktorik benötigt, um den Partikelfilter zu entwässern. Vorteilhaft ist zudem das Auspressen durch den Partikelfilter, indem beispielsweise Mikroplastik-Partikel nicht an dem Partikelfilter vorbeigelangen, sondern auch beim Auspressen durch den Partikelfilter zurückgehalten werden können.

Gemäß einer Ausführungsform umfasst das Haushaltsgerät einen zweiten Partikelfilter und eine zweite Fluidleitung, wobei die zweite Fluidleitung von dem Abwasserausgang zu einer ersten Seite des zweiten Partikelfilters führt, sodass Partikel, welche aus dem Abwasserausgang den Behandlungsraum verlassen, von dem zweiten Partikelfilter gefiltert werden,
wobei die erste Fluidleitung von der ersten Seite des zweiten Partikelfilters zu der Partikelfiltereinheit führt, wobei das Haushaltsgerät dazu eingerichtet ist, in einem ersten Betriebszustand einen Fluidstrom mit Partikeln von dem Behandlungsraum zu dem zweiten Partikelfilter zu leiten und in einem zweiten Betriebszustand, insbesondere in einem Rückspülbetrieb, einen Fluidstrom mit den von dem zweiten Partikelfilter gefilterten Partikeln vom dem zweiten Partikelfilter zu der Partikelfiltereinheit zu leiten. Gemäß dieser Ausführungsform können Partikel, insbesondere umfassend Mikroplastik-Partikel, zunächst in dem zweiten Partikelfilter aufgefangen werden. Der zweite Partikelfilter kann insbesondere vor einem Abwasseranschluss bzw. einer Abwasserleitung des wasserführenden Haushaltsgeräts angeordnet sein. Vorteilhafterweise kann in dem zweiten Betriebszustand das Retentat des zweiten Partikelfilters zu dem Partikelfilter der Partikelfiltereinheit gelangen. Durch das Vorsehen von zwei Partikelfiltereinheiten gemäß dieser Ausführungsform kann eine größere Flexibilität bei der Bauraumverwendung erreicht werden. Insbesondere kann dies den Vorteil haben, dass der Partikelfilter der Partikelfiltereinheit an einem Ort platziert werden kann, der für einen Nutzer besonders leicht zugänglich ist. Beispielsweise kann der zweite Partikelfilter in einem hinteren unteren Bereich des wasserführenden Haushaltsgeräts angeordnet sein, insbesondere entsprechend der Position des Abwasseranschlusses.

Vorteilhafterweise kann es vorgesehen sein, dass das Haushaltsgerät weiterhin eine Rückspülzuleitung und eine Abwasserleitung umfasst, die beide an einer der ersten Seite gegenüberliegenden zweiten Seite des zweiten Partikelfilters angeschlossen sind, wobei das Haushaltsgerät dazu eingerichtet ist, in dem ersten Betriebszustand einen Fluidstrom von dem Behandlungsraum durch den zweiten Partikelfilter in die Abwasserleitung zu leiten und in dem zweiten Betriebszustand einen Fluidstrom von der Rückspülzuleitung durch den zweiten Partikelfilter und durch die erste Fluidleitung zu der Partikelfiltereinheit zu leiten. Vorteilhafterweise kann das wasserführende Haushaltsgerät dazu ausgestaltet sein, dass in dem Rückspülbetrieb Wasser aus der Rückspülleitung durch den zweiten Partikelfilter gespült wird, sodass Partikel von dem zweiten Partikelfilter gelöst werden und durch die erste Fluidleitung zu dem Partikelfilter der Partikelfiltereinheit gelangen. Das wasserführende Haushaltsgerät kann dazu ausgestaltet sein, dass mit dem Rückspülbetrieb ein Fluidstrom erzeugt wird, der durch den zweiten Partikelfilter in entgegengesetzter Richtung zu dem Fluidstrom im ersten Betriebszustand fließt. Der erste Betriebszustand kann einem Filterbetrieb des zweiten Partikelfilters entsprechen. Mit Vorteil kann somit der zweite Partikelfilter zur Filterung des Abwassers verwendet werden. Insbesondere kann der zweite Partikelfilter dazu ausgelegt sein, eine größere Menge Wasser zu bewältigen als der Partikelfilter der Partikelfiltereinheit. Beispielsweise kann der zweite Partikelfilter entsprechend der Wassermenge einen größeren Querschnitt als der Partikelfilter der Partikelfiltereinheit aufweisen. Dies kann insbesondere ermöglicht sein, da nicht das gesamte Abwasser durch den Partikelfilter der Partikelfiltereinheit hindurchgelangen muss. Vorteilhafterweise kann das wasserführende Haushaltsgerät dazu ausgestaltet sein, eine geringere Wassermenge in dem zweiten Betriebszustand zu verwenden als in dem ersten Betriebszustand. Beispielsweise kann die Wassermenge in dem zweiten Betriebszustand um das 20- bis 4000-fache, bevorzugt 100- bis 1000-fache, besonders bevorzugt das 200, bis 600-fache, größer sein als die Wassermenge in dem ersten Betriebszustand. Beispielsweise kann in einem Behandlungsprogramm eine Wassermenge von 10 bis 150 Litern, bevorzugt 25 bis 100 Litern in dem ersten Betriebszustand durch den zweiten Partikelfilter geleitet werden. Dies kann vorzugsweise im Rahmen eines gesamten Waschprogramms vorgesehen sein. Alternativ kann es auch vorgesehen sein, den ersten Betriebszustand über eine einzelne Phase, insbesondere Wasch- oder Spülphase des Waschprogramms anzuwenden und dann den zweiten Betriebszustand folgen zu lassen. In dieser Alternative kann es vorteilhafterweise vorgesehen sein, zum Beispiel 10 bis 25 Liter in dem ersten Betriebszustand durch den zweiten Partikelfilter zu leiten. Beispielsweise kann in dem zweiten Betriebszustand eine Wassermenge von 20ml bis 11, bevorzugt 50ml bis 200ml, besonders bevorzugt weniger als 150 ml, durch den zweiten Partikelfilter und den Partikelfilter der Partikelfiltereinheit geleitet werden. Die genannten geleiteten Wassermengen können beispielsweise in beiden Fällen Partikel mit einem Gewicht von insgesamt ca. 2 bis 3 Gramm enthalten.

Vorteilhafterweise kann es vorgesehen sein, dass das Haushaltsgerät ein erstes Ventil in der ersten Fluidleitung, ein zweites Ventil in der zweiten Fluidleitung, ein drittes Ventil in der Rückspülleitung und ein viertes Ventil in der Abwasserleitung umfasst, wobei in dem ersten Betriebszustand das zweite Ventil und das vierte Ventil geöffnet sowie das erste Ventil und das dritte Ventil geschlossen sind und wobei in dem zweiten Betriebszustand das erste Ventil und das dritte Ventil geöffnet und das zweite Ventil und das vierte Ventil geschlossen sind. Ein Fluidstrom durch das zweite Ventil kann insbesondere aus dem Behandlungsraum kommen. Ein Fluidstrom durch das dritte Ventil kann insbesondere aus einer weiteren Wasserzufuhr, and die die Rückspülleitung angeschlossen ist, insbesondere mit Frischwasser bzw. Leitungswasser, gespeist werden. Das wasserführende Haushaltsgeräte kann zumindest eine Pumpe umfassen, die dazu ausgestaltet ist den Fluidstrom im ersten Betriebszustand und im zweiten Betriebszustand anzutreiben. Beispielsweise kann für den ersten Betriebszustand eine erste Pumpe und für den zweiten Betriebszustand eine zweite Pumpe vorgesehen sein. Die erste Pumpe kann vorzugsweise zwischen dem zweiten Ventil und dem zweiten Partikelfilter in der zweiten Fluidleitung angeordnet sein. Die zweite Pumpe kann vorzugsweise zwischen dem dritten Ventil und dem zweiten Partikelfilter in der Rückspülleitung angeordnet sein. Mit der Konfiguration kann zuverlässig erreicht werden, dass die jeweiligen Fluidströme in die jeweils richtige Richtung geleitet werden.

Gemäß einer Ausführungsform ist die Partikelfiltereinheit in einer Einspülschale oder oberhalb einer Einspülschale des wasserführenden Haushaltsgeräts angeordnet. Diese Ausführungsform kann besonders vorteilhaft sein, wenn sie zusammen mit der Ausführungsform mit einem zweiten Partikelfilter eingesetzt wird. Durch den zweiten Partikelfilter kann zunächst das Abwasser in eine Abwasserleitung geleitet werden. Die im zweiten Partikelfilter zurückbehaltenen Partikel können dann zu dem Partikelfilter der Partikelfiltereinheit in oder über der Einspülschale geleitet werden. Diese Ausführung hat den Vorteil, dass ein Nutzer relativ leicht an die Partikelfiltereinheit gelangen kann, um diese herauszunehmen. Zudem muss vorteilhafterweise kein zusätzlicher Zugang zu der Partikelfiltereinheit eingerichtet werden, sondern es kann die vorhandene Einspülschale verwendet werden. Die Partikelfiltereinheit kann an der Einspülschale befestigt oder befestigbar sein. Die Einspülschale kann das weiter oben erwähnte schubladenartige Element sein. Das wasserführende Haushaltsgerät kann derart ausgestaltet sein, dass ein Nutzer die Partikelfiltereinheit zusammen mit der Einspülschale herausziehen kann und die Partikelfiltereinheit dann der Einspülschale entnehmen kann, z.B. relativ einfach mit einer Hand. Das von dem Partikelfilter gefilterte Filtrat kann insbesondere in die Einspülschale tropfen und von dort wieder in den Behandlungsraum gelangen. Dies kann den zudem den Vorteil haben, dass Partikel, die nicht herausgefiltert wurden, erneut gefiltert werden können. Vorteilhafterweise kann der Nutzer den Partikelfilter direkt über der Einspülschale auspressen. Die Einspülschale kann dabei für diesen Zweck bequem und intuitiv erreichbar sein und ist zum Entnehmen der Partikelfiltereinheit ohnehin herausgezogen. Sollten bei dem Auspressen Partikel, insbesondere Mikroplastik-Partikel, in die Einspülschale gelangen, können diese vorteilhafterweise erneut gefiltert werden. Ein weiterer Vorteil kann sein, dass ein Nutzer automatisch an das Reinigen des Partikelfilters erinnert wird, indem er ohnehin die Einspülschale zum Befüllen regelmäßig öffnet und dabei die Partikelfiltereinheit sehen kann.

Vorteilhafterweise kann es vorgesehen sein, dass die Einspülschale einen Sperrmechanismus umfasst, der dazu ausgestaltet ist, dass ein Schließen der Einspülschale verhindert ist, wenn die Partikelfiltereinheit nicht in der Einspülschale angeordnet ist. Vorteilhafterweise kann damit das Risiko verringert werden, dass ein Nutzer vergisst, die Partikelfiltereinheit, z.B. nach dem Reinigen, einzusetzen. Der Sperrmechanismus kann einen Stift oder einen Rasthaken umfassen, der ein Schließen der Einspülschale verhindert, wenn die Partikelfiltereinheit nicht eingesetzt ist, und der dazu ausgestaltet ist automatisch zurückgezogen zu werden, wenn die Partikelfiltereinheit eingesetzt wird. Die Partikelfiltereinheit kann ein Entsicherungselement umfassen, dass dazu ausgestaltet ist, den Sperrmechanismus der Einspülschale zu entsichern, wenn die Partikelfiltereinheit in der Einspülschale angeordnet ist. Das Entsicherungselement kann mit dem Sperrmechanismus nach einem Schlüssel-Schloss-Prinzip zusammenwirken. Beispielsweise kann die Partikelfiltereinheit einen oder mehrere Stifte umfassen, die im in der Einspülschale eingebauten Zustand den Sperrmechanismus lösen. Vorzugsweise kann der Sperrmechanismus so in der Einspülschale angeordnet sein, dass er manuell durch eine Hand des Nutzers nicht oder nur schwer erreichbar ist. Damit kann das Risiko weiter verringert werden, dass ein Nutzer, z.B. in Eile, die Einspülschale ohne die Partikelfiltereinheit schließt.

Gemäß einer Ausführungsform ist das Haushaltsgerät dazu eingerichtet, eine Wassermenge, welche zum Rückspülen in dem zweiten Betriebszustand verwendet wird, über die Einspülschale in den Behandlungsraum weiterzuleiten, wobei das Haushaltsgerät optional dazu eingerichtet ist, den zweiten Betriebszustand zu aktivieren, wenn in einem Behandlungsprozess neues Wasser in dem Behandlungsraum benötigt wird. Diese Ausführungsform kann vorteilhafterweise mit der Ausführung mit einem zweiten Partikelfilter und den zwei Betriebszuständen kombiniert werden. Der zweite Betriebszustand, insbesondere der Rückspülvorgang, kann somit an den Wasserzulauf gekoppelt sein. Neues Wasser in dem Behandlungsraum kann z.B. für eine Hauptwäsche oder einen Spülgang benötigt werden. Diese Ausführungsform kann besonders vorteilhaft sein, indem eine Regenration bzw. Reinigung des zweiten Partikelfilter kein zusätzliches Wasser und keine zusätzliche Energie benötigt, indem das ohnehin in den Behandlungsraum zuzuführende Wasser verwendet wird.

Vorteilhafterweise kann es vorgesehen sein, dass die Partikelfiltereinheit in einer Hauptkammer oder oberhalb der Hauptkammer der Einspülschale angeordnet ist. Die Hauptkammer kann auch als Haupteinspülkammer oder Hauptwaschkammer bezeichnet werden. Die Hauptkammer kann aufgrund ihrer Größe und ihren Einsatz als Zuleitungsweg für in den Behandlungsraum geleitetes Wasser besonders gut für diesen Zweck geeignet sein. Alternativ kann die Partikelfiltereinheit auch in einer anderen Kammer der Einspülschale positioniert sein.

Gemäß einer Ausführungsform ist die Partikelfiltereinheit dazu ausgestaltet, die komplette Wassermenge, die während eines Behandlungsvorgangs des Haushaltsgeräts durch den Partikelfilter geleitet wird, aufzunehmen. Ein Behandlungsvorgang kann insbesondere alle Wasch- und Spülzyklen eines Waschprogramms umfassen. Die Partikelfiltereinheit kann eine Auffangbehälter umfasse. Der Auffangbehälter kann zum Aufnehmen des Wassers ausgestaltet sein, welches auf den Partikelfilter geleitet wird. Das Rückspülwasser sickert üblicherweise langsam durch den Filter. Dieses Durchsickern kann langsamer sein, wenn bereits eine gewisse Menge Retentat auf dem Partikelfilter angesammelt ist. Wird relativ viel Wasser in kurzer Zeit über den Partikelfilter geleitet, so kann sich dieses dort ansammeln. Diese Ausführungsform kann daher vorteilhaft sein, um einem Überlaufen entgegenzuwirken. Auch wenn kein Rückspülvorgang vorgesehen ist, insbesondere wenn z.B. das gesamte Abwasser durch den Partikelfilter der Partikelfiltereinheit geleitet wird, kann diese Ausführung vorteilhaft sein. In diesem Fall wäre es vorteilhaft die Partikelfiltereinheit bzw. den Auffangbehälter entsprechend groß auszugestalten. Allgemeiner kann die Partikelfiltereinheit dazu ausgestaltet sein, dass ein durchschnittliches Waschprogramm ohne ein Überlaufen gefiltert werden kann. Dabei kann die Filtergeschwindigkeit und die jeweils benötigte Menge Wasser berücksichtigt werden. Ein durchschnittliches Waschprogramm kann durch eine durchschnittliche anfallende Retentatmenge und durch eine angewandte Anzahl Rückspülzyklen, beispielsweise drei Rückspülzyklen, charakterisiert sein. Drei Rückspülzyklen können einer nach einem Einlaufen von Waschwasser und zwei nach dem Einlaufen von Spülwasser sein. Ein Überlaufen kann dadurch charakterisiert sein, dass einlaufendes Retentat und Rückspülwasser nicht mehr durch die Partikelfiltereinheit bzw. den Auffangbehälter aufgenommen werden kann. Alternativ kann ein mögliches Überlaufen auch in Kauf genommen werden, und der Partikelfilter entsprechend kleiner gestaltet sein. Dies kann vorteilhaft sein, um Bauraum einzusparen. Ein Überlaufen stellt zumindest bei der Ausführungsform mit einem zweiten Partikelfilter kein grundsätzliches Problem dar, da das überlaufende Wasser über die Einspülschale wieder in den Laugenbehälter geleitet und im Anschluss erneut vom zweiten Partikelfilter gefiltert wird, sodass kein ungefiltertes Wasser in den einen Abwasserablauf gelangt.

Gemäß einer Ausführungsform umfasst das Haushaltsgerät einen Anschlag, welcher den Auspressstempel der Partikelfiltereinheit in einer geöffneten Stellung hält, solange die Partikelfiltereinheit nicht aus dem Haushaltsgerät herausgenommen wird, wobei in der geöffneten Stellung eine Öffnung zwischen dem Auspressstempel und der Filtereinheit frei ist. Der Anschlag kann in oder an der Einspülschale angeordnet sein. Insbesondere kann der Anschlag an der Einspülschale fixiert sein. Alternativ kann der Anschlag oberhalb der Einspülschale angeordnet sein. Das Haushaltsgerät kann dazu ausgestaltet sein, dass der Anschlag beim Herausziehen der Einspülschale automatisch zurückgezogen wird. Alternativ, insbesondere wenn die Partikelfiltereinheit nicht in oder bei der Einspülschale angeordnet ist, kann der Anschlag entsprechend an dem für den Partikelfilter vorgesehenen Ort angeordnet sein. Vorteilhafterweise kann mit dieser Ausführungsform erreicht werden, dass der Zugang des Fluidstroms mit Partikeln zu dem Partikelfilter ermöglicht wird.

Gemäß einer Ausführungsform umfasst die Partikelfiltereinheit einen ersten Griff, der mit der Filtereinheit verbunden ist, und einen zweiten Griff der mit der dem Auspressstempel verbunden ist, wobei die Partikelfiltereinheit mit dem ersten und zweiten Griff manuell in eine geöffnete Stellung, in der eine Öffnung zwischen dem Auspressstempel und der Filtereinheit frei ist, und in eine Auspressstellung, in der der Auspressstempel auf den Partikelfilter oder ein Retentat auf dem Partikelfilter gepresst wird, überführbar ist. Die Partikelfiltereinheit kann einen den beiden Griffen gegenüberliegenden Drehpunkt aufweisen, an dem der Auspressstempel relativ zu dem Partikelfilter drehbar ist. Vorzugsweise ist der Partikelfilter zwischen dem Drehpunkt und den beiden Griffen angeordnet. Der erste und der zweite Griff können vorzugsweise so angeordnet sein, dass sie mit einer Hand zusammenpressbar sind. Vorzugsweise kann der erste Griff an der von dem Auspressstempel entfernten Seite etwas weiter hervorragen bzw. etwas länger sein als der zweite Griff. Der Anschlag des Haushaltsgeräts kann so ausgebildet sein, dass der zweite Griff auf dem Anschlag aufliegt, solange die Partikelfiltereinheit in seiner Position in dem Haushaltsgerät angeordnet ist. Diese Ausführungsform mit zwei Griffen kann eine effiziente Variante darstellen, mit der ein manuelles Auspressen auf einfache Weise ermöglicht wird.

Gemäß einer Ausführungsform umfasst die Partikelfiltereinheit eine Rakel, die dazu ausgestaltet ist, durch manuelles Bedienen ein Retentat von dem Partikelfilter entfernen zu können. Vorzugsweise kann die Partikelfiltereinheit einen Auffangbehälter mit halbkreisförmigem Querschnitt umfassen. Optional kann der Auffangbehälter mit halbkugelförmigem Hohlraum ausgebildet sein. Die Rakel kann sich vorzugsweise angepasst an die Halbkreisform entlang einem Längenhalbkreis der Rakel erstrecken. Alternativ optional kann der Auffangbehälter gemäß einem auf entlang seiner Zylinderachse halbierten Hohlzylinder ausgebildet sein. Vorzugsweise kann der Hohlzylinder ein Kreiszylinder sein. Vorzugsweise kann die Rakel an die Form des Auffangbehälters angepasst sein. Die Rakel kann sich vorzugsweise entlang der Zylinderachse erstrecken. Vorzugsweise ist die Rakel dazu ausgestaltet senkrecht zu der Zylinderachse bewegt zu werden und durch den Auffangbehälter zu schwenken. Der Partikelfilter kann in eine Bodenbereich des Hohlzylinders bzw. der Halbkugel ausgebildet sein. Vorzugsweise ist die Rakel dazu ausgebildet, bei dem manuellen Bedienen über den Partikelfilter zu streichen. Die Partikelfiltereinheit kann dazu ausgestaltet sein, dass eine Bewegung der Rakel über einen Aktivierungsmechanismus, insbesondere einen Hebel, in einem Griff der Partikelfiltereinheit ausgelöst werden kann. Die Partikelfiltereinheit kann eine Feder umfassen, die dazu ausgestaltet ist, beim manuellen Betätigen gespannt zu werden und die Rakel nach dem Betätigen mit ihrer Rückstellkraft in eine Ausgangstellung zurückzubewegen. Die Bewegung und Rückstellung der Rakel kann analog zu einem Kugelauswurf eines Eislöffels ausgebildet sein. Vorteilhafterweise kann mit dieser Ausführungsform ein Entfernen des Retentats bzw. des sogenannten Filterkuchens vereinfacht werden. Insbesondere kann das Retentat bzw. der Filterkuchen ohne direktes Anfassen eines Nutzers entfernbar sein.

Gemäß einem weiteren Aspekt der vorliegenden Erfindung ist eine Partikelfiltereinheit zur Filtrierung von einem mit Partikeln versetzen Fluid in einem wasserführenden Haushaltsgerät, insbesondere eine Partikelfiltereinheit wie hierin beschrieben vorgeshen. Die Partikelfiltereinheit umfasst einen Partikelfilter und einen Auspressstempel, der es einem Nutzer ermöglicht, manuell Wasser aus dem Retentat durch den Partikelfilter herauszupressen. Die Merkmale und Vorteile, die für wasserführende Haushaltsgerät beschrieben worden sind, gelten in entsprechender Weise analog für die Partikelfiltereinheit und andersrum.

Gemäß einem weiteren Aspekt der vorliegenden Erfindung ist ein Verfahren zum Reinigen einer Partikelfiltereinheit eines wasserführenden Haushaltsgeräts, insbesondere eines wasserführenden Haushaltsgeräts wie hierin beschrieben, von einem angesammelten Retentat vorgesehen. Das Verfahren umfasst die folgenden Schritte:
(a) Manuelles Herausnehmen der Partikelfiltereinheit aus dem Haushaltsgerät;
(b) Auspressen der Partikelfiltereinheit mit einem Auspressstempel, sodass das ausgepresste Wasser in das Haushaltsgerät, und vorzugsweise durch zumindest einen zweiten Partikelfilter des Haushaltsgeräts, gelangt;
(c) Entfernen des Retentats aus der Partikelfiltereinheit.

Die Merkmale und Vorteile, die für wasserführende Haushaltsgerät und die Partikelfiltereinheit beschrieben worden sind, gelten in entsprechender Weise analog für das Verfahren und andersrum. Vorzugsweise kann das Auspressen direkt über einer herausgezogenen Einspülschale vorgesehen sein. Der Schritt des manuellen Herausnehmens kann ein Öffnen einer Einspülschale umfassen, in der die Partikelfiltereinheit angeordnet ist. Das Auspressen der Partikelfiltereinheit kann vorzugsweise manuell vorgesehen sein, insbesondere mit Handkraft. Zum Auspressen können zwei Griffe der Partikelfiltereinheit vorgesehen sein. Es kann vorzugsweise vorgesehen sein bzw. zweckmäßig sein, den Auspressstempel vor dem Entfernen des Retentats wieder zu öffnen. Das Entfernen des Retentats kann ein Ausschlagen umfassen, insbesondere über einem Mülleimer. Im Anschluss an das Entfernen des Retentats kann ein Zurückbewegen der Partikelfiltereinheit an ihre Position in dem Haushaltsgerät und ggf. optional ein Schließen der Einspülschale vorgesehen sein.

Weitere Vorteile und Merkmale ergeben sich aus der nachfolgenden Beschreibung bevorzugter Ausführungsformen des erfindungsgemäßen Gegenstands mit Bezug auf die beigefügten Figuren. Die folgende Beschreibung dient lediglich der Verdeutlichung der Erfindung und sollte nicht derart aufgefasst werden, dass durch sie die beiliegenden Ansprüche auf eine der Ausführungsformen beschränkt werden. Einzelne Merkmale der einzelnen Ausführungsform können dabei im Rahmen der Erfindung miteinander kombiniert werden. Es zeigen
- **Fig. 1**: eine Seitenansicht eines Ausschnitts eines Wasserführenden Haushaltsgeräts gemäß einer Ausführungsform der Erfindung,
- **Fig. 2**: eine Seitenansicht eines Ausschnitts eines Wasserführenden Haushaltsgeräts gemäß einer Ausführungsform der Erfindung,
- **Fig. 3**: eine Seitenansicht eines Ausschnitts eines Wasserführenden Haushaltsgeräts gemäß einer Ausführungsform der Erfindung,
- **Fig. 4**: eine Schnittansicht von oben auf einen Ausschnitt eines wasserführenden Haushaltsgeräts gemäß einer Ausführungsform der Erfindung,
- **Fig. 5**: ein schematisches Flussdiagramm, welches ein Verfahren zum Reinigen einer Partikelfiltereinheit eines wasserführenden Haushaltsgeräts von einem Retentat gemäß einer Ausführungsform der Erfindung darstellt,
- **Fig. 6**: eine bildliche Darstellung der einzelnen Stationen der Verwendung einer Partikelfiltereinheit gemäß einer Ausführungsform der Erfindung,
- **Fig. 7**: eine Seitenansicht eines Ausschnitts eines Wasserführenden Haushaltsgeräts gemäß einer weiteren Ausführungsform der Erfindung,
- **Fig. 8**: eine Seitenansicht eines Ausschnitts eines Wasserführenden Haushaltsgeräts gemäß einer weiteren Ausführungsform der Erfindung und
- **Fig. 9**: eine Vorderansicht auf einen Querschnitt eines wasserführenden Haushaltsgeräts gemäß einer Ausführungsform der Erfindung.
- **Fig. 10**: zeigt perspektivische Querschnitte durch eine Partikelfiltereinheit mit einer Rakel in vier verschiedenen Rakelstellungen.

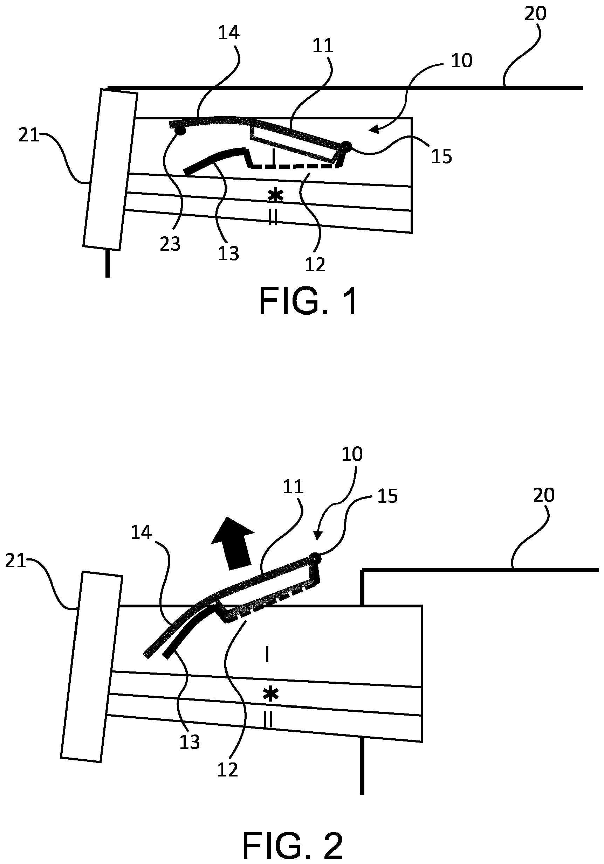

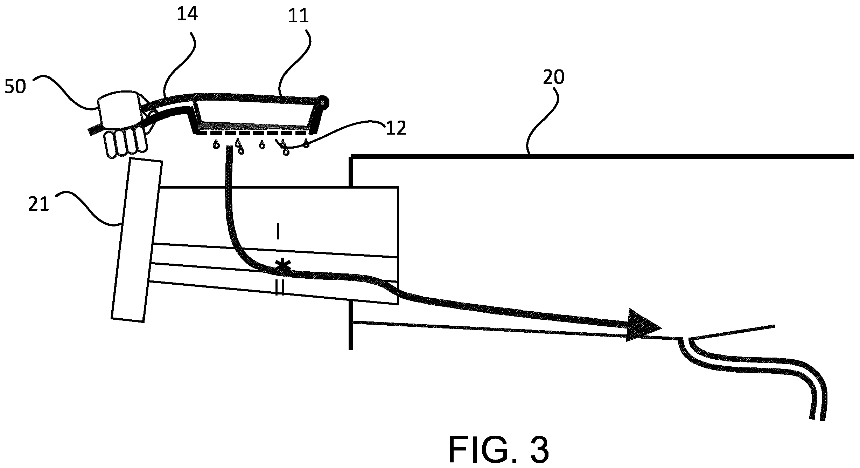

Die **Figuren 1 bis 3** zeigen eine Seitenansicht eines wasserführenden Haushaltsgeräts 20 gemäß einer Ausführungsform der Erfindung. Das wasserführende Haushaltsgerät 20 umfasst in dieser Ausführungsform eine Partikelfiltereinheit 10, die in einer Einspülschale 21 des wasserführenden Haushaltsgeräts 20 angeordnet ist bzw. anordenbar ist. Die Partikelfiltereinheit 10 umfasst einen Partikelfilter 12 sowie einen Auspressstempel 11. An dem Partikelfilter 12 ist ein erster Griff 13 befestigt und an dem Auspressstempel 11 ist ein zweiter Griff 14 befestigt. In Figur 1 ist die Partikelfiltereinheit 10 in dem wasserführenden Haushaltsgerät 20 angeordnet. Der zweite Griff 14 wird durch einen Anschlag 23 hochgehalten, sodass zwischen dem Partikelfilter 12 und dem Auspressstempel 11 eine Lücke bzw. eine Öffnung frei ist. In Figur 2 wird ein entnehmen der Partikelfiltereinheit 10 aus dem wasserführenden Haushaltsgerät 20 dargestellt. Beim Herausnehmen wird der zweite Griff 14 nicht mehr durch den Anschlag 23 hochgehalten, sodass der Auspressstempel 11 und der Partikelfilter 12 über einen Drehpunkt 15 derart gedreht werden können, dass der Auspressstempel 11 auf den Partikelfilter 12 zubewegt wird. In Figur 3 wird ein Auspressen der Partikelfiltereinheit 10 durch einen Nutzer 50 dargestellt. Dazu drückt der Nutzer 50 mit seinen Händen oder mit einer Hand den ersten Griff 13 gegen den zweiten Griff 14, sodass der Auspressstempel 11 über den Drehpunkt 15 gegen den Partikelfilter 12 gedreht wird. Dadurch kann ein Retentat 1 (hier nicht gezeigt) ausgepresst werden. Bevorzugt kann die Partikelfiltereinheit 10 über der Einspülschale 21 ausgepresst werden, sodass das ausgepresste Wasser in die Einspülschale 21 gelangt und von der Einspülschale in einen Behandlungsraum 26 des wasserführenden Haushaltsgeräts 20 geleitet werden kann.

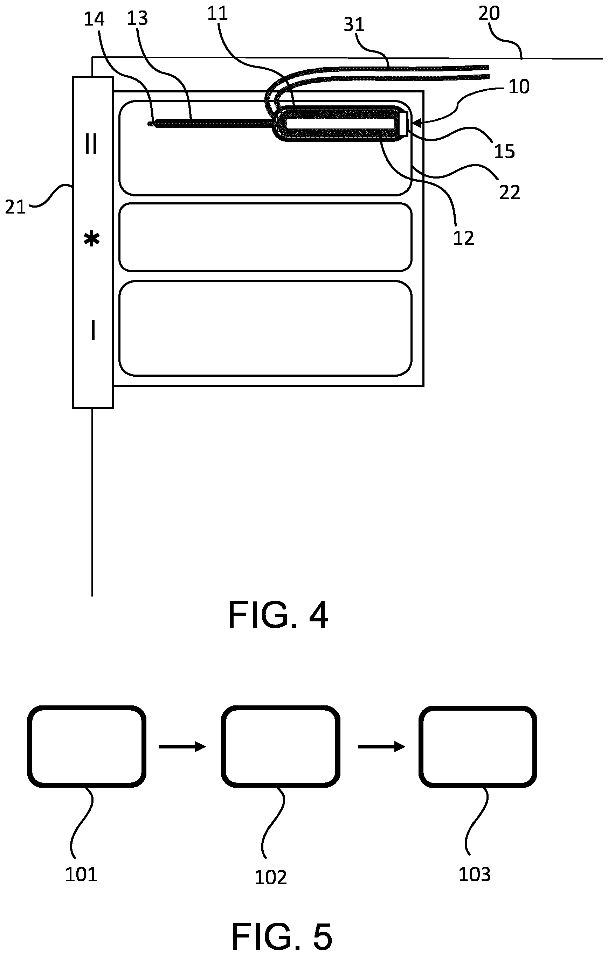

**Figur 4** zeigt eine Schnittansicht von oben auf ein wasserführendes Haushaltsgerät 20 gemäß einer Ausführungsform der Erfindung. Dort ist zu sehen, dass die Partikelfiltereinheit 10 in einer Hauptkammer 22 der Einspülschale 21 angeordnet ist. Eine erste Fluidleitung 31 ist dazu ausgebildet einen Fluidstrom zu dem Partikelfilter 12 zu leiten, sodass Partikel, insbesondere umfassend Mikroplastik-Partikel, in dem Fluidstrom durch den Partikelfilter 12 herausgefiltert gefiltert werden. Die Zeichen I, * und II bezeichnen die verschiedenen Kammern die bevorzugt für die Einspülschale 21 vorgesehen sind. Die Kammer I ist typischerweise für einen Vorwaschgang vorgesehen, die Kammer II ist die Hauptkammer 22 der Einspülschale und typischerweise für den Hauptwaschgang vorgesehen. Die mit * bezeichnete Kammer kann typischerweise zum Beispiel zum Eingeben eines Weichspülers verwendet werden.

**Figur 5** zeigt ein schematisches Flussdiagramm, welches ein Verfahren zum Reinigen einer Partikelfiltereinheit 10 eines wasserführenden Haushaltsgeräts 10 von einem Retentat 1 gemäß einer Ausführungsform der Erfindung darstellt. In einem ersten Schritt 101 wird die Partikelfiltereinheit 10 manuell aus dem wasserführenden Haushaltsgerät 20 herausgenommen. In einem weiteren Schritt wird die Partikelfiltereinheit 10 mit einem Auspressstempel 11 manuell ausgepresst sodass das ausgepresste Wasser in das wasserführende Haushaltsgerät 20 gelangt. Vorzugsweise gelangt das ausgepresste Wasser durch zumindest einen zweiten Partikelfilter 30 des wasserführenden Haushaltsgeräts 20. Wird das ausgepresste Wasser durch einen zweiten Partikelfilter 30 geleitet bevor es in das Abwasser gelangt, kann ermöglicht werden, dass insbesondere evtl. nicht von dem ersten Partikelfilter 12 zurückgehaltene Mikroplastik-Partikel oder beim Auspressen verlorene Mikroplastik-Partikel erneut gefiltert werden. In einem weiteren Schritt 103 wird das Retentat 1 aus der Partikelfiltereinheit 10 entfernt, z.B. durch Ausklopfen auf einem Mülleimer.

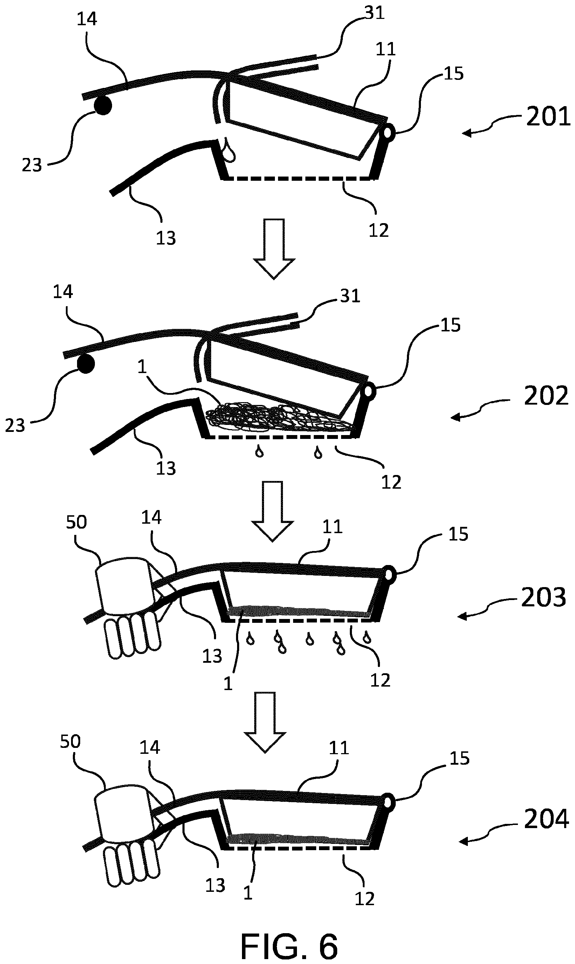

**Figur 6** zeigt eine bildliche Darstellung der einzelnen Stationen der Verwendung einer Partikelfiltereinheit 10 gemäß einer Ausführungsform der Erfindung. In einer ersten Station 201 ist die Partikelfiltereinheit 10 noch in dem wasserführenden Haushaltsgerät 20 angeordnet. Durch einen Anschlag 23 wird der Auspressstempel 11 hochgehalten, sodass ein Fluidstrom durch eine erste Fluidleitung 31 in einen Auffangbehälter 16 der Partikelfiltereinheit 10 gelangen kann. Vorzugsweise ist der Auffangbehälter 16 dazu ist, eine komplette Wassermenge, die während eines Behandlungsvorgangs des Haushaltsgeräts 20 durch den Partikelfilter 12 geleitet wird, aufzunehmen. Der Fluidstrom, umfassend insbesondere Wasser und Partikel, wird in Station 202 durch einen Partikelfilter 12 gefiltert, sodass sich ein Retentat 1 in dem Auffangbehälter 16 sammelt. Zum Reinigen wird die Partikelfiltereinheit 10 durch einen Nutzer 50 aus dem wasserführenden Haushaltsgerät 20 herausgenommen und in Station 203 ausgepresst, indem der Nutzer manuell einen ersten Griff 13 und einen zweiten Griff 14 der Partikelfiltereinheit zusammenpresst. Dies geschieht vorzugsweise so, dass das herausgepresst Wasser zurück in das wasserführende Haushaltsgerät 20 gelangt, insbesondere in eine Einspülschale 21 des wasserführenden Haushaltsgeräts 20. In Station 204 ist das Retentat 1 ausgepresst und kann von dem Nutzer 50 entfernt werden. Dazu kann der Nutzer die Griffe 13, 14 öffnen und das Retentat 1 beispielsweise über einem Mülleimer ausklopfen.

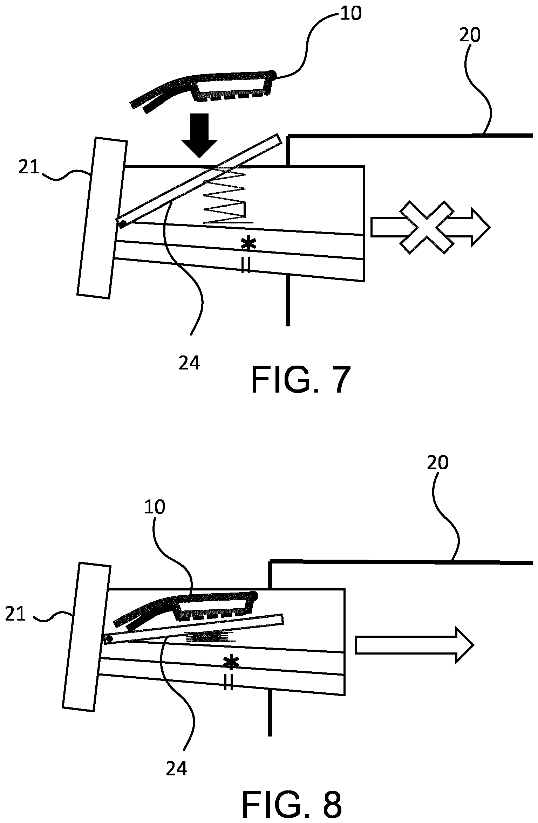

Die **Figuren 7 und 8** zeigen eine Seitenansicht eines Ausschnitts eines Wasserführenden Haushaltsgeräts 20 gemäß einer weiteren Ausführungsform der Erfindung. Das Haushaltsgerät 20 umfasst in dieser Ausführungsform eine Einspülschale 21 in welches die eine Partikelfiltereinheit 10 einsetzbar ist. Die Einspülschale umfasst in dieser Ausführungsform einen Sperrmechanismus 24, der dazu ausgestaltet ist, dass ein Schließen der Einspülschale 21 verhindert ist, wenn die Partikelfiltereinheit 10 nicht in der Einspülschale 21 angeordnet ist. Dies wird in diesem Ausführungsbeispiel durch einen Federmechanismus umgesetzt, welcher einen Hebel anhebt, wenn die Partikelfiltereinheit 10 nicht eingesetzt ist. Vorzugsweise kann die Partikelfiltereinheit 10 ein Entsicherungselement umfassen, dass speziell auf den Sperrmechanismus 24 ausgerichtet ist und dazu ausgestaltet ist, den Sperrmechanismus 24 der Einspülschale 21 zu entsichern, wenn die Partikelfiltereinheit 10 in der Einspülschale 21 angeordnet ist. Beispielsweise kann die Partikelfiltereinheit 10 einen oder mehrere Stifte umfassen, die beim Einsetzen dafür sorgen, dass der Sperrmechanismus 24 gelöst werden kann. In der Figur 6 ist die Partikelfiltereinheit 10 der Einspülschale 21 entnommen, wodurch ein Schließen der Einspülschale 21 durch den Sperrmechanismus 24 verhindert wird. In Figur 7 ist die Partikelfiltereinheit 10 hingegen in die Einspülschale 21 eingesetzt, wodurch ein Schließen der Einspülschale 21 ermöglicht wird.

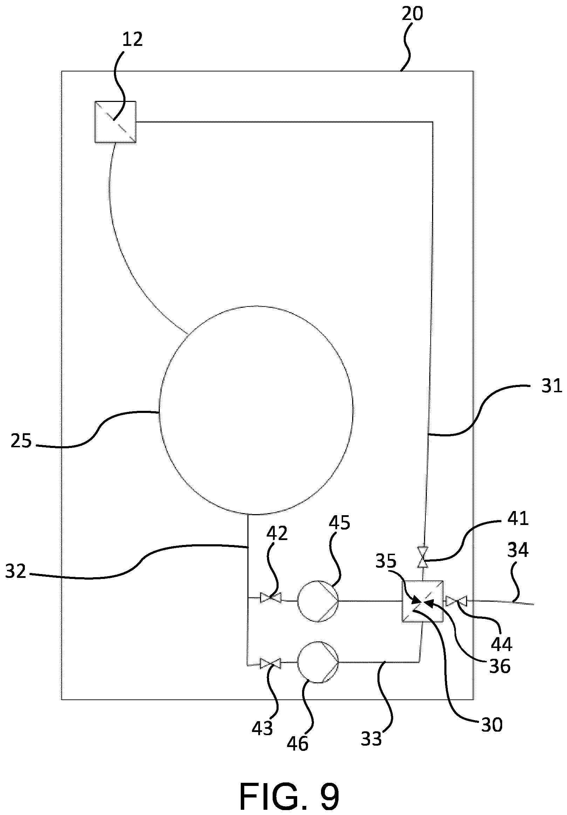

Die **Figur 9** zeigt eine Vorderansicht auf einen Querschnitt eines wasserführenden Haushaltsgeräts 20 gemäß einer Ausführungsform der Erfindung. In dieser Ausführungsform umfasst das Haushaltsgerät 20 neben dem Partikelfilter 12 der Partikelfiltereinheit 10 einen zweiten Partikelfilter 30 und eine zweite Fluidleitung 31. Die Membran bzw. der Filter der Partikelfilter 12, 30 ist in dieser Zeichnung durch eine gestrichelte Linie gekennzeichnet. Die Partikelfiltereinheit 10 kann insbesondere so ausgestaltet sein, wie in den anderen Ausführungsformen gezeigt. Die zweite Fluidleitung 32 führt von eine Abwasserausgang eines Behandlungsraums 25 des Haushaltsgeräts zu einer ersten Seite 35 des zweiten Partikelfilters 30, sodass Partikel, welche aus dem Abwasserausgang den Behandlungsraum 25 verlassen, von dem zweiten Partikelfilter 30 gefiltert werden. Die erste Fluidleitung 31 führt von der ersten Seite 35 des zweiten Partikelfilters 30 zu der Partikelfiltereinheit 10. Das Haushaltsgerät 20 ist dazu eingerichtet bzw. konfiguriert, in einem ersten Betriebszustand einen Fluidstrom mit Partikeln von dem Behandlungsraum 25 zu dem zweiten Partikelfilter 30 zu leiten. Dazu umfasst das Haushaltsgerät 20 weiterhin eine Rückspülzuleitung 33 und eine Abwasserleitung 34, die beide an einer der ersten Seite 35 gegenüberliegenden zweiten Seite 36 des zweiten Partikelfilters 30 angeschlossen sind. In dem ersten Betriebszustand wird einen Fluidstrom von dem Behandlungsraum 25 durch die zweite Fluidleitung 32 und den zweiten Partikelfilter 30 in die Abwasserleitung 34 geleitet, wobei Partikel aus dem Fluidstrom durch den zweiten Partikelfilter 30 zurückgehalten werden. In einem zweiten Betriebszustand, insbesondere in einem Rückspülbetrieb, wird einen Fluidstrom ausgehend von der Rückspülzuleitung 33 mit den von dem zweiten Partikelfilter 30 gefilterten Partikeln vom dem zweiten Partikelfilter 30 zu der Partikelfiltereinheit 10 geleitet. Vorzugswese umfasst das Haushaltsgerät 20 ein erstes Ventil 41 in der ersten Fluidleitung 31, ein zweites Ventil 42 in der zweiten Fluidleitung 32, ein drittes Ventil 43 in der Rückspülleitung 33 und ein viertes Ventil 44 in der Abwasserleitung 34. In dem ersten Betriebszustand sind das zweite Ventil 42 und das vierte Ventil 44 geöffnet und das erste Ventil 41 und das dritte Ventil 43 sind geschlossen. In dem zweiten Betriebszustand sind das erste Ventil 41 und das dritte Ventil 43 geöffnet und das zweite Ventil 42 und das vierte Ventil 42 sind geschlossen. Vorzugsweise ist das Haushaltsgerät 20 dazu eingerichtet ist, eine Wassermenge, welche zum Rückspülen in dem zweiten Betriebszustand verwendet wird, über eine Einspülschale 21 in den Behandlungsraum 25 weiterzuleiten. Insbesondere kann es vorgesehen sein, den zweiten Betriebszustand zu aktivieren, wenn in einem Behandlungsprozess neues Wasser in dem Behandlungsraum 25 benötigt wird.

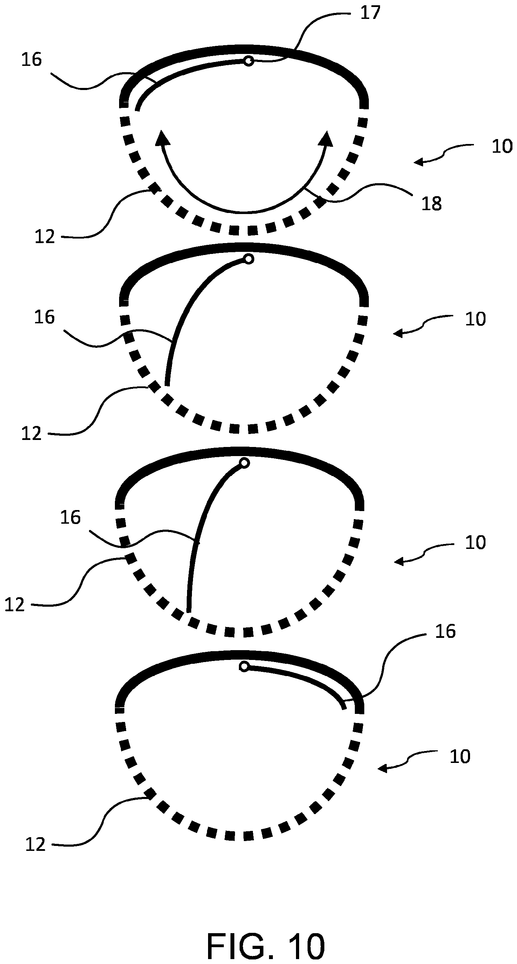

Die **Figur 10** zeigt einen perspektivischen Querschnitt durch eine Partikelfiltereinheit 10 mit einer Rakel 16 in vier verschiedenen Rakelstellungen. Dazu sind vier im Wesentlichen gleiche Ansichten der Partikelfiltereinheit 10 gezeigt, wobei die Stellung der Rakel 16 jeweils unterschiedlich ist. der Partikel Die Partikelfiltereinheit 10 umfasst hier einen Auffangbehälter mit halbkreisförmigem Querschnitt, welcher durch den Partikelfilter 12 gebildet wird. Die Rakel 16 ist dabei an die Form des Auffangbehälters angepasst. Die Rakel 16 ist dazu ausgestaltet, durch manuelles Bedienen ein Retentat 1 von dem Partikelfilter 12 entfernen zu können, insbesondere durch entlangstreichen über den Partikelfilter 12. Die Rakelbewegungsrichtung ist durch eine Doppelpfeil 18 angedeutet. Die Rakel 16 ist an einer Aufhängungsachse 17 befestigt. Vorzugsweise die Rakel 16 auf zwei gegenüberliegenden Seiten jeweils an einer Aufhängungsachse 17 befestigt. Die Partikelfiltereinheit 10 kann insbesondere dazu ausgestaltet sein, dass eine Bewegung der Rakel 16 über einen Aktivierungsmechanismus, insbesondere einen Hebel, in einem Griff der Partikelfiltereinheit 10 ausgelöst werden kann. Die Bewegung und Rückstellung der Rakel 16 kann beispielsweise analog zu einem Kugelauswurf eines Eislöffels ausgebildet sein.

### Bezugszeichenliste:

- 1: Retentat
- 10: Partikelfiltereinheit
- 11: Auspressstempel
- 12: Partikelfilter der Partikelfiltereinheit
- 13: erster Griff
- 14: zweiter Griff
- 15: Drehpunkt
- 16: Rakel
- 17: Aufhängungsachse der Rakel
- 18: Rakelbewegungsrichtung
- 20: wasserführendes Haushaltsgerät
- 21: Einspülschale
- 22: Hauptkammer der Einspülschale
- 23: Anschlag
- 24: Sperrmechanismus
- 25: Behandlungsraum
- 30: zweiter Partikelfilter
- 31: erste Fluidleitung
- 32: zweite Fluidleitung
- 33: Rückspülleitung
- 34: Abwasserleitung
- 35: erste Seite des zweiten Partikelfilters
- 36: zweite Seite des zweiten Partikelfilters
- 41: erstes Ventil
- 42: zweites Ventil
- 43: drittes Ventil
- 44: viertes Ventil
- 45: erste Pumpe
- 46: zweite Pumpe
- 50: Nutzer
- 101-103: Verfahrensschritte
- 201-204: Stationen der Verwendung einer Partikelfiltereinheit

## Patentansprüche

1. Wasserführendes Haushaltsgerät (20), insbesondere Waschmaschine oder Waschtrockner, umfassend einen Behandlungsraum (25) mit einem Abwasserausgang, zumindest eine erste Fluidleitung (31) und eine Partikelfiltereinheit (10) mit einem Partikelfilter,
wobei die erste Fluidleitung (31) dazu ausgestaltet ist, Partikel, welche aus dem Abwasserausgang den Behandlungsraum (25) verlassen, mit einem Fluidstrom zu dem Partikelfilter (12) zu leiten, sodass die Partikelfiltereinheit (10) die Partikel mittels dem Partikelfilter (12) aus dem Fluidstrom herausfiltert und in Form eines Retentats (1) sammelt,
wobei die Partikelfiltereinheit (10) derart in dem Haushaltsgerät (20) angeordnet ist, dass sie von einem Nutzer (50) herausnehmbar ist,
wobei die Partikelfiltereinheit (10) ein Entwässerungselement, insbesondere einen Auspressstempel (11), umfasst, das es einem Nutzer (50) ermöglicht, manuell Wasser aus dem Retentat (1) durch den Partikelfilter (12) herauszupressen.

2. Wasserführendes Haushaltsgerät (20) gemäß Anspruch 1,
wobei das Haushaltsgerät (20) einen zweiten Partikelfilter (30) und eine zweite Fluidleitung (32) umfasst,
wobei die zweite Fluidleitung (32) von dem Abwasserausgang zu einer ersten Seite des zweiten Partikelfilters (30) führt, sodass Partikel, welche aus dem Abwasserausgang den Behandlungsraum (25) verlassen, von dem zweiten Partikelfilter (30) gefiltert werden,
wobei die erste Fluidleitung (31) von der ersten Seite des zweiten Partikelfilters zu der Partikelfiltereinheit (10) führt,
wobei das Haushaltsgerät (20) dazu eingerichtet ist, in einem ersten Betriebszustand einen Fluidstrom mit Partikeln von dem Behandlungsraum (25) zu dem zweiten Partikelfilter (30) zu leiten und in einem zweiten Betriebszustand, insbesondere in einem Rückspülbetrieb, einen Fluidstrom mit den von dem zweiten Partikelfilter (30) gefilterten Partikeln vom dem zweiten Partikelfilter (30) zu der Partikelfiltereinheit (10) zu leiten.

3. Wasserführendes Haushaltsgerät (20) gemäß Anspruch 2,
wobei die Partikelfiltereinheit (10) in einer Einspülschale (21) oder oberhalb einer Einspülschale (21) des Haushaltsgeräts (20) angeordnet ist.

4. Wasserführendes Haushaltsgerät (20) gemäß Anspruch 3,
wobei die Einspülschale (21) einen Sperrmechanismus (24) umfasst, der dazu ausgestaltet ist, dass ein Schließen der Einspülschale (21) verhindert ist, wenn die Partikelfiltereinheit (10) nicht in der Einspülschale (21) angeordnet ist.

5. Wasserführendes Haushaltsgerät (20) gemäß einem der Ansprüche 3 bis 4,
wobei das Haushaltsgerät (20) dazu eingerichtet ist, eine Wassermenge, welche zum Rückspülen in dem zweiten Betriebszustand verwendet wird, über die Einspülschale (21) in den Behandlungsraum (25) weiterzuleiten,
wobei das Haushaltsgerät (20) insbesondere dazu eingerichtet ist, den zweiten Betriebszustand zu aktivieren, wenn in einem Behandlungsprozess neues Wasser in dem Behandlungsraum (25) benötigt wird.

6. Wasserführendes Haushaltsgerät (20) gemäß einem der vorhergehenden Ansprüche, wobei das Haushaltsgerät (20) einen Anschlag (23) umfasst, welcher den Auspressstempel (11) der Partikelfiltereinheit (10) in einer geöffneten Stellung hält, solange die Partikelfiltereinheit (10) nicht aus dem Haushaltsgerät (20) herausgenommen wird, wobei in der geöffneten Stellung eine Öffnung zwischen dem Auspressstempel (11) und der Filtereinheit frei ist.

7. Wasserführendes Haushaltsgerät (20) gemäß einem der vorhergehenden Ansprüche, wobei die Partikelfiltereinheit (10) einen ersten Griff (13), der mit der Filtereinheit verbunden ist, und einen zweiten Griff (14) der mit der dem Auspressstempel (11) verbunden ist, umfasst,
wobei die Partikelfiltereinheit (10) mit dem ersten und zweiten Griff manuell in eine geöffnete Stellung, in der eine Öffnung zwischen dem Auspressstempel (11) und der Filtereinheit frei ist, und in eine Auspressstellung, in der der Auspressstempel (11) auf den Partikelfilter (12) oder ein Retentat (1) auf dem Partikelfilter (12) gepresst wird, überführbar ist.

8. Wasserführendes Haushaltsgerät (20) gemäß einem der vorhergehenden Ansprüche, wobei die Partikelfiltereinheit (10) eine Rakel (16) umfasst, die dazu ausgestaltet ist, durch manuelles Bedienen ein Retentat (1) von dem Partikelfilter (12) entfernen zu können.

9. Partikelfiltereinheit (10) zur Filtrierung von einem mit Partikeln versetzen Fluid in einem wasserführenden Haushaltsgerät (20), insbesondere Partikelfiltereinheit (10) wie in einem der vorhergehenden Ansprüche,
wobei die Partikelfiltereinheit (10) einen Partikelfilter (12) und einen Auspressstempel (11) umfasst, der es einem Nutzer (50) ermöglicht, manuell Wasser aus dem Retentat (1) durch den Partikelfilter (12) herauszupressen.

10. Verfahren zum Reinigen einer Partikelfiltereinheit (10) eines wasserführenden Haushaltsgeräts (20), insbesondere eines wasserführenden Haushaltsgeräts (20) gemäß einem der Ansprüche 1 bis 8, von einem angesammelten Retentat (1) umfassend die folgenden Schritte:
(a) Manuelles Herausnehmen der Partikelfiltereinheit (10) aus dem Haushaltsgerät (20);
(b) Auspressen der Partikelfiltereinheit (10) mit einem Auspressstempel (11), sodass das ausgepresste Wasser in das Haushaltsgerät (20), und vorzugsweise durch zumindest einen zweiten Partikelfilter (30) des Haushaltsgeräts (20), gelangt;
(c) Entfernen des Retentats (1) aus der Partikelfiltereinheit (10).
